(19) Europäisches Patentamt
European Patent Office
Office européen des brevets

(11) **EP 2 560 787 B1**

(12) **EUROPÄISCHE PATENTSCHRIFT**

(45) Veröffentlichungstag und Bekanntmachung des Hinweises auf die Patenterteilung:
**02.10.2013 Patentblatt 2013/40**

(21) Anmeldenummer: **12708502.5**

(22) Anmeldetag: **14.02.2012**

(51) Int Cl.:
**B23Q 17/22** (2006.01)      **B23Q 11/00** (2006.01)

(86) Internationale Anmeldenummer:
**PCT/EP2012/052479**

(87) Internationale Veröffentlichungsnummer:
**WO 2012/116889 (07.09.2012 Gazette 2012/36)**

(54) **WERKZEUGMASCHINE**

MACHINE TOOL

MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2011 DE 102011013155**

(43) Veröffentlichungstag der Anmeldung:
**27.02.2013 Patentblatt 2013/09**

(73) Patentinhaber: **Chiron-Werke GmbH & Co. KG 78532 Tuttlingen (DE)**

(72) Erfinder:
• PRUST, Dirk
  78532 Tuttlingen (DE)
• KOHLER, Markus
  78194 Immendingen (DE)

(74) Vertreter: **Witte, Weller & Partner Königstrasse 5 70173 Stuttgart (DE)**

(56) Entgegenhaltungen:
WO-A1-2008/041257      WO-A1-2011/092104
DE-A1- 2 450 322       US-A- 3 045 510

**Beschreibung**

Die vorliegende Erfindung betrifft eine Werkzeugmaschine nach dem Oberbegriff des Anspruchs 1 (siehe z.B. DE 24 50 322).

Derartige Werkzeugmaschinen sind aus dem Stand der Technik hinlänglich bekannt.

In der Regel weisen diese Werkzeugmaschinen eine Arbeitsspindel auf, die an ihrem freien stimseitigen Abschnitt eine Werkzeugaufnahme aufweist, in die Bearbeitungswerkzeuge oder Werkzeughalter eingespannt werden, in die dann Bearbeitungswerkzeuge fest eingespannt sind.

Die mit diesen Bearbeitungswerkzeugen zu bearbeitenden Werkstücke werden in der Regel auf einen Maschinentisch aufgespannt, wobei die Arbeitsspindel und das Werkstück in den drei orthogonalen Achsen des Koordinatensystems zueinander verfahrbar sind, die im Rahmen der vorliegenden Erfindung als Maschinenachsen mit x, y, und z bezeichnet werden.

Dabei ist es bekannt, diese drei Maschinenachsen vollständig in dem Werkzeug zu realisieren, wobei es auch bekannt ist, eine oder zwei Maschinenachsen in dem Werkstück vorzusehen.

Darüber hinaus können das Werkstück und/oder das Werkzeug um verschiedene Achsen geschwenkt werden, wobei es auch bekannt ist, das Werkstück um seine Längsachse in Rotation zu versetzen, so dass Dreharbeiten an dem Werkstück vorgenommen werden können.

Bei den bekannten Werkzeugmaschinen können die Arbeitsspindeln horizontal oder vertikal ausgerichtet sein.

In einem Ausführungsbeispiel sind die erfindungsgemäßen Werkzeugmaschinen sog. Fahrständermaschinen, bei denen an einem Maschinengestell ein in x-Richtung verfahrender Schlitten angeordnet ist, auf den ein in y-Richtung fahrender Fahrständer montiert ist. An dem Fahrständer ist ein vertikal, also in z-Richtung verfahrbarer Spindelkopf gelagert, in dem die Arbeitsspindel drehbar angeordnet ist.

Dieser Spindelkopf kann zusätzlich noch an dem Fahrständer verschwenkbar sein.

Bei all diesen bekannten Werkzeugmaschinen ist von größter Bedeutung, dass die Werkstücke mit hoher Bearbeitungsgenauigkeit bearbeitet werden. Eine hohe Bearbeitungsgenauigkeit beinhaltet auch eine hohe Reproduzierbarkeit, so dass in einer Serie gefertigte Werkstücke zueinander in der Maßhaltigkeit nur geringfügig abweichen dürfen.

Neben Genauigkeitsproblemen, die sich durch die Verfahrbewegungen und die Verlagerung von Massen bei den bekannten Werkzeugmaschinen ergeben, spielen auch thermische Effekte insbesondere dann eine große Rolle, wenn die Bearbeitungsgenauigkeit im Mikrometerbereich liegen muss.

Diese thermischen Probleme resultieren aus den unterschiedlichen Einsatzorten und -bedingungen der bekannten Werkzeugmaschinen. Nach einer längeren Stillstandsphase, bspw. über Nacht, müssen die Werkzeugmaschinen zudem erst wieder auf "Betriebstemperatur" kommen, was erst nach einer gewissen Anzahl von Bearbeitungszyklen der Fall sein kann.

Dann spielt die sich ändernde Umgebungstemperatur während des Arbeitstages eine große Rolle, wobei auch der Einfluss von direkter Sonnenbestrahlung dazu führen kann, dass die Werkzeugmaschine sich in unterschiedlichen Bereichen unterschiedlich erwärmt.

All diese thermischen Effekte führen zu sog. thermischen Verlagerungen und/oder Längungen, die im Ergebnis dazu führen, dass die Lage des Werkzeuges zu einem Koordinatenursprung nicht mehr genau bestimmt werden kann.

Die Maschinensteuerung der bekannten Werkzeugmaschinen geht nämlich von bestimmten festen geometrischen Beziehungen aus, wobei die relativen Bewegungen zwischen den einzelnen bewegten Maschinenteilen durch ein Messsystem erfasst werden, dass zwei zusammen wirkende Elemente umfasst.

Die beiden Elemente des Messsystems sind beispielsweise ein Messkopf und ein Längenmaßstab, in der Regel ein Glasmaßstab. Diese Elemente werden an zwei Maschinenteilen angeordnet, die gegeneinander verfahrbar sind, und deren relative Lage zueinander bestimmt werden muss. Beispielsweise wird der Glasmaßstab an dem Fahrständer und der Messkopf an dem Spindelkopf angeordnet, um so die Lage des Werkzeuges in z-Richtung messen zu können.

Aus dem Messergebnis des Messsystems und dem bekannten Abstand zwischen der Werkzeugaufnahme und dem Ort an dem Spindelkopf, wo der Messkopf angeordnet ist, kann dann die relative Lage der Werkzeugaufnahme und somit des Werkzeuges zu einem Referenzpunkt bestimmt werden.

Wenn sich nun die als konstant abgespeicherte Länge eines dieser Maschinenteile aufgrund von thermischen Verlagerungen ändert, so führt dies zu Fehlern in der Zustellung der Werkzeuge.

Um diese thermischen Verlagerungen zu beherrschen, sind im Stand der Technik mehrere Vorgehensweisen bekannt.

Die DE 10 2004 044 838 A1 beschreibt ein Verfahren, bei dem an verschiedenen Stellen in der Werkzeugmaschine Temperaturwerte gemessen und nach einer Rechenregel zu einem Korrekturwert verrechnet werden, mit dem dann die in der Maschinensteuerung gespeicherten Bewegungsbefehle korrigiert werden.

Die DE 103 30 915.2 A1 beschreibt ein Verfahren zur Kompensation von Verlagerungen infolge thermischer Ausdehnungen, bei dem in der Werkzeugmaschine eine Lichtschranke vorgesehen ist. Die Werkzeuge werden dieser Lichtschranke zugestellt, wobei die bei der Unterbrechung der Lichtschranke gemessene Position als Maß für die momentane relative Lage des Spindelstockes zu dem Koordinatenursprung erfasst wird. Auf diese Weise können thermische Verlagerungen erfasst und rechnerisch kompensiert werden.

Aus der DE 197 27 952 A1 ist es bekannt, bestimmte Teile einer Werkzeugmaschine mit einer besonderen Wärmeisolationsschicht zu versehen, um plötzliche Temperaturänderungen bspw. durch Kühlschmiermittel zu verhindern, die ansonsten ebenfalls zu thermischen Verlagerungen führen könnten.

Im Stand der Technik ist es also bekannt, die Effekte von thermischen Verlagerungen rechnerisch anhand von Temperaturmessungen zu kompensieren, durch entsprechende Isolation oder Kühlung zu vermeiden bzw. messtechnisch während der Bearbeitungsprozesse zu erfassen und rechnerisch zu kompensieren.

Obwohl all diese Verfahren ihre spezifischen Vorteile haben, weisen sie doch alle inhärente Nachteile auf.

Während die Verfahren zur Kühlung bzw. Isolation von Maschinenteilen zu konstruktiv aufwändigen Werkzeugmaschinen führen und zudem nur bestimmte thermische Effekte vermeiden können, unterliegen die Rechenverfahren, die auf Temperaturmessungen basieren, immer einer mathematischen Modellannahme, so dass sie nur mit einer gewissen Genauigkeit eingesetzt werden können.

Die unmittelbaren Messverfahren, bei denen im Arbeitsprozess immer wieder die Lage des Werkzeuges zu dem Koordinatenursprung bestimmt wird, weisen zwar eine sehr große Genauigkeit auf, sie kosten jedoch Hauptzeit, weil sie mit dem Bearbeitungswerkzeug immer dann durchgeführt werden müssen, wenn dieses Bearbeitungswerkzeug eigentlich im Einsatz am Werkstück ist.

Vor diesem Hintergrund wird dieses an sich sehr genaue Verfahren häufig nicht oder nur stichprobenartig eingesetzt, was insgesamt ebenfalls unbefriedigend ist.

Vor diesem Hintergrund liegt der vorliegenden Erfindung die Aufgabe zugrunde, eine Werkzeugmaschine der eingangs genannten Art bereitzustellen, bei der die Probleme verringert sind, die mit thermischen Verlagerungen einhergehen.

Erfindungsgemäß wird diese Aufgabe bei der eingangs genannten Werkzeugmaschine dadurch gelöst, dass das erste Element des Messsystems verschiebbar an dem ersten Maschinenteil gelagert ist, und dass zwischen einem Messpunkt an dem ersten Maschinenteil und dem ersten Element des Messsystems eine thermisch weitgehend längenunveränderliche Verbindung vorgesehen ist.

Die der Erfindung zugrundeliegende Aufgabe wird auf diese Weise vollkommen gelöst.

Der Erfinder der vorliegenden Anmeldung hat nämlich erkannt, dass die Wirkung der thermischen Verlagerung auf diese Weise kompensiert werden kann, ohne dass dazu Kühlmaßnahmen, komplizierte Rechenwege, Temperaturmessungen oder Zustellbewegungen innerhalb der Hauptzeit erforderlich sind.

Erfindungsgemäß wird nämlich der Abstand zwischen einem Element des Messsystems und dem Teil der Werkzeugmaschine konstant gehalten, an dem der betreffende Messpunkt sitzt. Das betreffende Element des Messsystems ist dabei verschieblich an dem entsprechenden Maschinenteil gelagert.

Mit anderen Worten, der als konstant in der Maschinensteuerung hinterlegte Abstand zwischen dem ersten Element des Messsystemes und dem betreffenden Messpunkt an dem ersten Maschinenteil wird erfindungsgemäß jetzt tatsächlich konstant gehalten, thermische Ausdehnungen oder Schrumpfungen, allgemein also thermische Verlagerungen, führen jetzt dazu, dass die Lage des ersten Elementes des Messsystems an dem ersten Maschinenteil verändert wird.

Dieses erste Element des Messsystems wird also an dem Maschinenteil um den Betrag in der betreffenden Richtung verfahren, um den sich der Messpunkt an dem betreffenden Maschinenteil infolge der thermischen Verlagerung verschiebt.

Selbst wenn die beiden Maschinenteile zueinander nicht verfahren werden, führt diese thermisch bedingte Verlagerung des ersten Elementes des Messsystems dazu, dass eine Verlagerung des Messpunktes gemessen wird.

Durch die thermisch weitgehend längenunveränderliche Verbindung wird sozusagen der Ort der Messung zu dem Messpunkt selbst verlagert. Der messsystemfernen Messpunkt wird an das Messsystem angekoppelt, so dass die Wirkung des thermischen Verhaltens der zwischen dem Messsystem und dem messfernen Messpunkt liegenden Messkette sozusagen kompensiert wird. Mit anderen Worten, das thermische Verhalten des ersten Maschinenelementes wird aus der Messkette entfernt, weil die thermisch weitgehend längenunveränderliche Verbindung außerhalb des Kraftflusses zwischen dem ersten und dem zweiten Maschinenelement liegt.

Im Rahmen der vorliegenden Erfindung wird unter einer "thermisch weitgehend längenunveränderlichen Verbindung" eine Verbindung verstanden, die eine wärmeabhängige Längenänderung aufweist, die im Bereich der Längenänderung liegt, die eine Invar-Legierung oder eine vergleichbare Legierung mit entsprechenden Abmessungen aufweisen würde. Es ist bevorzugt, wenn der Wärmeausdehnungskoeffizient dieser thermisch weitgehend längenunveränderlichen Verbindung nicht schlechter ist als der Wärmeausdehnungskoeffizient von Invar, also unterhalb von 5 ppm/K, vorzugsweise unterhalb von 1 ppm/K liegt.

Unter einer "Invar-Legierung" wird in an sich bekannter Weise eine Eisen-Nickel-Legierung oder eine vergleichbare Legierung verstanden, die im Stand der Technik überall dort eingesetzt wird, wo besonderer Wert auf Längenstabilität bei Temperaturschwankungen gelegt wird, und deren Wärmeausdehnungskoeffizient unterhalb von 5 ppm/K, vorzugsweise unterhalb von 1 ppm/K liegt.

Unter einem "Messpunkt" wird im Rahmen der vorliegenden Erfindung ein bestimmter Punkt oder ein bestimmter Bereich einer Werkzeugmaschine verstanden, dessen relative Lage zu dem Koordinatenursprung bekannt sein muss, damit die Bearbeitung eines Werkstückes mit der erforderlichen Genauigkeit erfolgen kann.

Dieser Messpunkt kann bspw. ein Referenzpunkt auf dem x-Schlitten oder dem y-Schlitten sein, wobei es besonders bevorzugt ist, wenn der Messpunkt an dem stimseitigen Abschnitt der Arbeitsspindel liegt, in dem die Werkzeugaufnahme vorgesehen ist.

Auf diese Weise befindet sich der Messpunkt so dicht wie möglich an der Werkzeugaufnahme, seine Position gibt also die Lage des jeweils eingespannten Bearbeitungswerkzeuges zu dem Koordinatenursprung wieder. Selbstverständlich müssen die Abmaße des Bearbeitungswerkzeuges selbst noch berücksichtigt werden, diese sind jedoch bekannt und ebenfalls in der Maschinensteuerung abgelegt.

Von besonderem Vorteil ist bei der vorliegenden Erfindung, dass das sowieso vorgesehene Messsystem auch zur Kompensation der Wirkung thermischer Verlagerungen verwendet werden kann. Dazu muss lediglich das an dem ersten Maschinenteil vorgesehene erste Element des Messsystems verschiebbar angeordnet sein, wobei ferner eine thermisch weitgehend längenunveränderliche Verbindung zwischen diesem ersten Element des Messsystems sowie dem Messpunkt vorgesehen ist.

Damit sind weder zusätzliche Rechenregeln noch Zustellbewegungen erforderlich, die thermische Verlagerung kompensiert sich sozusagen automatisch, weil nämlich die Wirkung der thermisch weitgehend längenunveränderlichen Komponenten aus der Messkette entfernt wird. Durch die thermisch weitgehend längenunveränderliche Verbindung wird die Kette der an der thermischen Verlagerung beteiligten Maschinenteile sozusagen überbrückt, ohne dass dadurch die thermisch weitgehend längenunveränderliche Verbindung selbst in den Kraftfluss zwischen den Maschinenelementen eingefügt wird.

Die Kompensation erfolgt somit automatisch bereits dann, wenn sich ein Maschinenteil thermisch bedingt längt. Dies wird von der Steuerung genauso verarbeitet, wie das gewünschte Verfahren des ersten Maschinenteils gegenüber dem zweiten Maschinenteil.

Erste Messungen bei der Anmelderin haben ergeben, dass auf diese Weise Dehnungen in der z-Achse bei einer Fahrständermaschine mit einer Genauigkeit von besser als 5 μm erfasst werden können.

Dabei ist es bevorzugt, wenn die thermisch weitgehend längenunveränderliche Verbindung einen Invar-Stab umfasst.

Dieser Invar-Stab kann beliebig schräg in dem Spindelkopf verlaufen, Winkel und Längen des Invar-Stabes spielen für den erfindungsgemäßen Effekt keine Rolle.

Wichtig ist lediglich, dass durch die Richtung der Verschiebbarkeit des an dem ersten Maschinenteil verschiebbar gelagerten ersten Elementes des Messsystems die Maschinenachse bestimmt wird, in der die Wirkung der thermischen Verlagerung kompensiert wird.

Dabei ist es allgemein bevorzugt, wenn das erste Maschinenteil ein in Richtung der z-Achse verschiebbares Maschinenteil ist, in dem die Arbeitsspindel gelagert ist, wobei vorzugsweise das erste Element des Messsystems in Richtung der z-Achse verschiebbar gelagert.

Hier sei bemerkt, dass mit z-Achse üblich die Längsachse der Arbeitsspindel bezeichnet wird.

Weiter ist es bevorzugt, wenn das zweite Maschinenteil ein Ständer oder y-Schlitten ist, an dem das die z-Achse bildende Maschinenteil gelagert ist.

Allgemein ist es dabei bevorzugt, wenn das erste Element des Messsystems über eine Feder spielfrei gegenüber der thermisch weitgehend längenunveränderlichen Verbindung gelagert ist.

Bei dieser Maßnahme ist von Vorteil, dass Lose oder Spiel in der Verbindung des Invar-Stabes zu dem ersten Element des Messsystems und/oder den Messpunkt nicht zu Messungenauigkeiten führen.

Dies ist insbesondere dann wichtig, wenn der Invar-Stab an seinen beiden Enden gelenkig mit dem ersten Element des Messsystems und/oder dem Messpunkt verbunden ist, weil er bspw. schräg an dem Spindelkopf verläuft.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1 eine schematische Anordnung aus einem ersten Maschinenteil sowie einem daran verfahrbar gelagerten zweiten Maschinenteil, wobei die für die Positionsbestimmung eines Messpunktes an dem ersten Maschinenteil relevanten Beziehungen angegeben sind;

Fig. 2 eine Darstellung wie Fig. 1, wobei jedoch die Effekte einer thermischen Verlagerung und deren erfindungsgemäße Kompensation gezeigt sind; und

Fig. 3 in schematischer Vorderansicht eine Werkzeugmaschine, bei der das neue System zur Kompensation von thermischen Verlagerungen schematisch gezeigt ist.

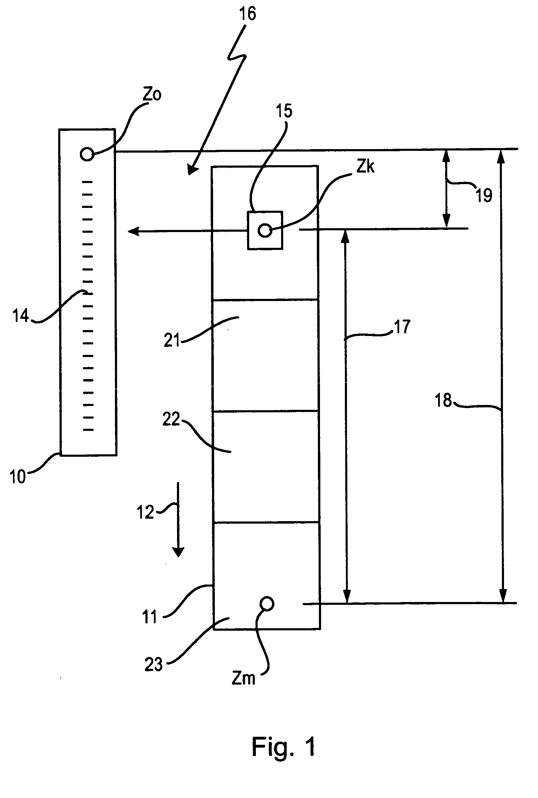

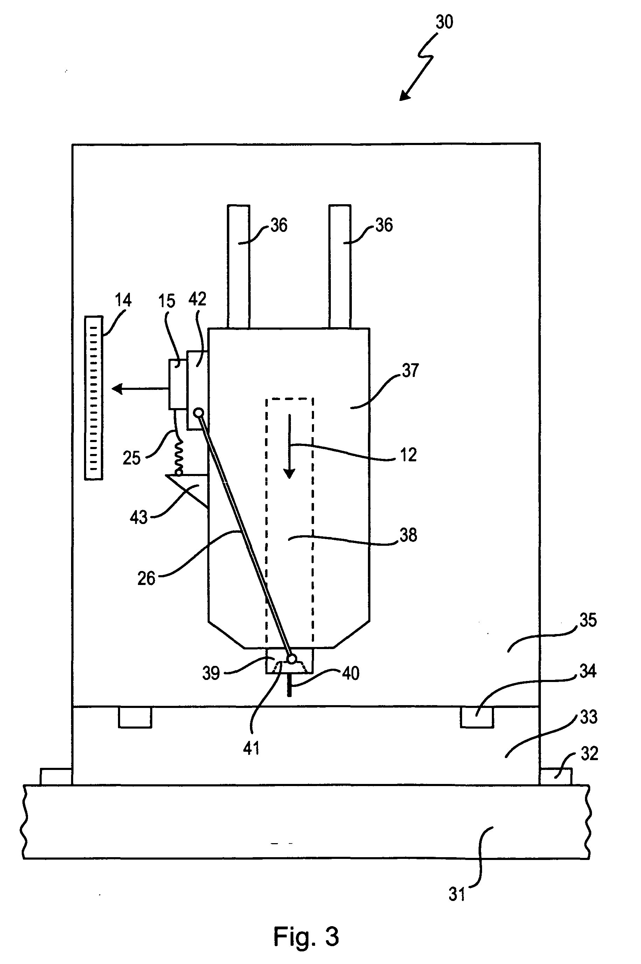

In Fig. 1 ist schematisch ein Maschinenteil 10 dargestellt, gegenüber dem ein Maschinenteil 11 in einer mit dem Pfeil 12 angedeuteten Richtung verfahrbar ist. Das Maschinenteil 11 kann dabei unmittelbar an dem Maschinenteil 10 gelagert sein, es kann aber auch an einem weiteren Maschinenteil gelagert sein, an dem auch das Maschinenteil 10 gelagert ist. Die beiden Maschinenteile 10, 11 sind Teil einer Werkzeugmaschine 30, wie sie in Fig. 3 gezeigt ist.

Die Richtung 12 ist bspw. die z-Achse einer Werkzeugmaschine und fällt dann mit der Längsrichtung der Arbeitsspindel zusammen.

An dem Maschinenteil 10 ist ein Koordinatenursprung oder Referenzpunkt Z0 angeordnet, gegenüber dem die Lage eines Messpunktes Zm an dem zweiten Maschinenteil 11 bestimmt werden soll. Der Messpunkt Zm liegt bspw. an der Stirnseite der Werkzeugspindel, in die Bearbeitungswerkzeuge eingespannt sind.

Um die relative Lage des Maschinenteils 11 zu dem Maschinenteil 10 bestimmen zu können, ist an dem Maschinenteil 10 ein Maßstab 14 angeordnet, bspw. ein Glasmaßstab, während an dem Maschinenteil 11 ein Messkopf 15 angeordnet ist, der mit dem Maßstab 14 zusammenwirkt, was durch einen Pfeil angedeutet ist.

Über das aus Messkopf 15 und Maßstab 14 gebildete Messsystem 16 wird der Abstand zwischen dem Koordinatenursprung oder Referenzpunkt 20 und einem weiteren Referenzpunkt Zk auf dem Maschinenteil 11 in z-Richtung 12 bestimmt.

Um die relative Lage des Messpunktes Zm zu dem Koordinatenursprung Z0 bestimmen zu können, muss noch der Abstand zwischen dem Referenzpunkt Zk und dem Messpunkt Zm bekannt sein, der in Fig. 1 mit 17 bezeichnet ist.

Wenn dieser Abstand 17 bekannt ist, berechnet sich der mit 18 gekennzeichnete Abstand zwischen dem Koordinatenursprung Z0 und dem Messpunkt Zm als Summe aus dem Abstand ZkZm 17 sowie dem gemessenen Abstand Z0Zk, der in Fig. 1 mit 19 bezeichnet ist.

$$ZmZ0 = ZmZk + ZkZ0$$

Das Maschinenteil 11 besteht nun häufig nicht aus einem einzigen festen Bauteil, sondern ist aus mehreren Komponenten zusammengesetzt, die in Fig. 1 schematisch mit 21, 22 und 23 bezeichnet sind. Über diese Komponenten 21, 22, 23 erfolgt der Kraftfluss zwischen den beiden Maschinenteilen 10,11.

An den Übergängen zwischen den einzelnen Komponenten und/oder innerhalb der Komponenten kann es nun zu thermischen Verlagerungen und Längungen kommen, so dass der Abstand ZmZk 17 sich im Laufe des Einsatzes der Maschinenteile 10, 11 verändert, ohne dass dies von der Steuerung erkannt werden kann.

Dies ist insbesondere bei Werkzeugmaschinen der Fall, bei denen das Maschinenteil 11 dem Spindelkopf entspricht, in dem die Arbeitsspindel gelagert ist, während das Maschinenteil 10 dem Ständer oder y-Schlitten entspricht.

Diese thermischen Verlagerungen beeinträchtigen die Bearbeitungsgenauigkeit, so dass sie durch verschiedenste Maßnahmen kompensiert werden.

In dem in Fig. 1 gezeigten schematischen Modell äußert sich eine thermische Verlagerung oder Längung dadurch, dass der Abstand ZmZk 17 sich verändert, in der Regel also größer wird. Da dieser Abstand jedoch in der Steuerung der Werkzeugmaschine als fester Wert abgelegt ist und nicht messtechnisch erfasst werden kann, wird die Längung in der Regel anhand von mathematischen Modellen geschätzt und kompensiert.

Diese Verfahren sind jedoch unzuverlässig und zeitaufwändig, wobei sie zudem nur eine gewisse Kompensation der thermischen Verlagerungen ermöglichen.

Erfindungsgemäß ist nun der Messkopf 15 an dem Maschinenteil 11 in Richtung einer der Maschinenachsen x, y, z, hier der der z-Achse 12, verschiebbar aber spielfrei gelagert.

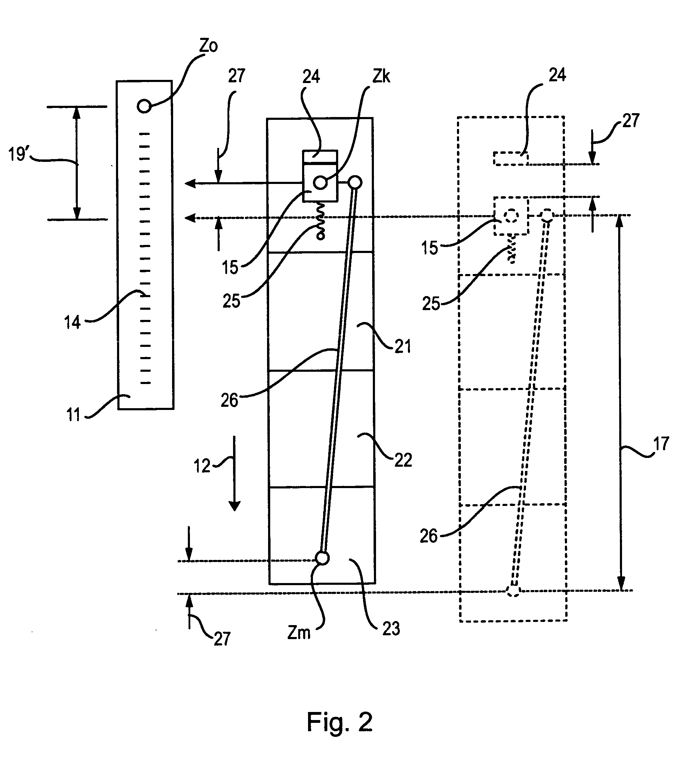

In Fig. 2 ist dies durch einen Anschlag 24 dargestellt, gegen den der Messkopf 15 über-eine Druckfeder 25 in Anlage gedrückt wird. Für diese Ausgangsposition ist der Abstand ZmZk 17 einmal bestimmt worden und in der Maschinensteuerung abgespeichert.

Der Messkopf 15 ist ferner über einen Stab 26 mit der Maschinenkomponente 23 verbunden, auf der der Messpunkt Zm liegt.

Wenn sich das Maschinenteil 11 jetzt infolge thermischer Verlagerungen längt, so wird der Messkopf 15 gegen die Kraft der Druckfeder 25 in Richtung der z-Achse 12 gezogen. Diese Situation ist gestrichelt in Fig. 2 rechts angedeutet, wo zwischen dem Messkopf 15 und dem Anschlag 24 ein kleiner Spalt 27 zu erkennen ist. An dem unteren Ende des Maschinenteils 11 ist zu erkennen, dass es sich um genau diesen Abstand 27 in Richtung der z-Achse 12 gelängt hat, so dass der Abstand zwischen dem Messpunkt Zm und dem Koordinatenursprung Z0 um genau den Abstand 27 vergrößert wurde.

Dadurch, dass der Messkopf durch den Stab 26 in Richtung der z- Achse gezogen wurde, hat sich der Abstand zwischen dem Koordinatenursprung Z0 und dem Referenzpunkt Zk ebenfalls um den Abstand 27 vergrößert.

Obwohl sich die relative Lage zwischen dem Maschinenteil 10 und dem Maschinenteil 11 nicht geändert hat, hat sich durch die thermische Längung des Maschinenteils 11 der Abstand des Messpunktes Zm zu dem Koordinatenursprung Z0 um den Abstand 27 vergrößert. Der Stab 26 befindet sich dabei nicht im Kraftfluss zwischen den Maschinenteilen 10, 11.

Bei der Bestimmung des Abstandes ZmZ0 18 wird jetzt ein um den Abstand 27 größerer Abstand zwischen dem Koordinatenursprung Z0 und dem Referenzpunkt Zk gemessen, der Abstand ZmZk 17 ist dagegen unverändert gleich geblieben.

Der Stab 26, der den Messkopf 15 an den Messpunkt zm auf der Maschinenkomponente 23 koppelt, darf folglich die thermische Längung des Maschinenteils 11 nicht "mitmachen".

Aus diesem Grund besteht der Stab 26 aus Invar oder einem geeigneten Material, das einen vergleichbaren Wärmeausdehnungskoeffizienten aufweist wie Invar, vorzugsweise sogar einen noch geringeren Wärmeausdehnungskoeffizienten, der üblicherweise unter 1ppm/K liegt.

Auf diese Weise wird die Wirkung von in dem Maschinenteil 11 auftretenden thermischen Verlagerungen auf die Bearbeitungsgenauigkeit dadurch aufgefangen werden, dass der Abstand des Messkopfes 15 zu dem Messpunkt Zm durch eine thermisch weitgehend längenunveränderliche Verbindung in Form des Invar-Stabs 26 konstant gehalten wird, während der Messkopf 15 gegenüber dem Maßstab 14 um den Betrag der thermischen Längung 27 verschoben wird.

In Fig. 3 ist ein konkretes Ausführungsbeispiel einer Werkzeugmaschine 30 gezeigt, die einen auf einem Maschinenbett 31 in y-Richtung über Führungen 32 verfahrbaren Schlitten 33 aufweist. Auf dem Schlitten 33 ist über Führungen 34 ein Ständer 35 in x-Richtung verfahrbar.

An dem Ständer 35 ist über Führungen 36 ein Spindelkopf 37 gelagert, der eine Arbeitsspindel 38 trägt, die um ihre Längsachse 12 drehbar gelagert ist. An ihrem stirnseitigen Abschnitt 39 ist eine Werkzeugaufnahme 41 vorgesehene, in die in an sich bekannter Weise Bearbeitungswerkzeuge 40 oder Werkzeughalter für Bearbeitungswerkzeuge 40 eingesetzt werden.

An dem Ständer 35 ist der aus Fig. 1 bekannte Maßstab 14 angeordnet, während an dem Spindelkopf 37 der Messkopf 15 angeordnet ist, der auf einem eigenen Schlitten 42 in Richtung der z-Achse 12 verfahrbar ist. Dieser Schlitten 42 wird durch die druckfeder 25 in seine Grundposition vorgespannt, die sich auf einer Konsole 43 abstützt, die an dem Spindelkopf 37 angeordnet ist.

Zwischen dem Schlitten 42 und dem stirnseitigen Abschnitt 39 der Arbeitsspindel 38 ist der Stab 26 gespannt, der dort mit der Arbeitsspindel 38 verbunden ist, wo diese aus dem Spindelkopf 33 7 nach unten herausragt.

Der Stab 26 ist gelenkig an dem stirnseitigen Abschnitt 39 und an dem Schlitten 42 gelagert.

Gemäß dem anhand der Figuren 1 und 2 beschriebenen Prinzip führt eine thermische Verlagerung des stirnseitigen Abschnittes 39 der Arbeitsspindel 38 jetzt dazu, dass der Messkopf 15 in z-Richtung 12 verfahren wird, so dass der Effekt der thermischen Verlagerung aus der Messkette herausfällt.

**Patentansprüche**

1. Werkzeugmaschine mit einem ersten Maschinenteil (11), das gegenüber einem zweiten Maschinenteil (10) verfahrbar gelagert ist, wobei an dem ersten Maschinenteil (11) ein erstes Element (15) und an dem zweiten Maschinenteil (10) ein mit dem ersten Element (15) zusammenwirkendes zweites Element (14) eines Messsystemes (16) angeordnet ist, das die relative Position der beiden Maschinenteile (10, 11) zueinander erfasst, wobei
das erste Element (15) des Messsystems (16) verschiebbar an dem ersten Maschinenteil (11) gelagert ist, **dadurch gekennzeichnet, dass** zwischen einem Messpunkt ($Z_m$) an dem ersten Maschinenteil (11) und dem ersten Element (15) des Messsystemes (16) eine thermisch weitgehend längenunveränderliche Verbindung (26) vorgesehen ist.

2. Werkzeugmaschine nach Anspruch 1, **dadurch gekennzeichnet, dass** das erste Element (15) des Messsystems (16) in Richtung einer Maschinenachse (x, y z), vorzugsweise der z-Achse (12) verschiebbar gelagert ist.

3. Werkzeugmaschine nach Anspruch 1 oder 2, **dadurch gekennzeichnet, dass** die thermisch weitgehend längenunveränderliche Verbindung (26) einen Stab, vorzugsweise einen Invar-Stab umfasst.

4. Werkzeugmaschine nach einem der Ansprüche 1 bis 3, **dadurch gekennzeichnet, dass** die thermisch weitgehend längenunveränderliche Verbindung (26) einen Wärmeausdehnungskoeffizient aufweist, der unterhalb von 5 ppm/K, vorzugsweise unterhalb von 1 ppm/K liegt.

5. Werkzeugmaschine nach einem der Ansprüche 1 bis 4, **dadurch gekennzeichnet, dass** das erste Element (15) über eine Feder (25) gegenüber der thermisch weitgehend längenunveränderlichen Verbindung (26) spielfrei gelagert ist.

6. Werkzeugmaschine nach einem der Ansprüche 1 bis 5, **dadurch gekennzeichnet, dass** das erste Maschinenteil (11) in Richtung der z-Achse (12) verschiebbar ist und eine Arbeitsspindel (38) drehbar lagert, an deren stirnseitigem Abschnitt (39) eine Aufnahme (41) für Bearbeitungswerkzeuge (43) oder Werkzeughalter vorgesehen ist, und dass der Messpunkt (Zm) an diesem vorderen Abschnitt (39) angeordnet ist.

7. Werkzeugmaschine nach Anspruch 6, **dadurch gekennzeichnet, dass** das zweite Maschinenteil (10) ein y-Schlitten oder Fahrständer (35) ist.

**Claims**

1. Machine tool comprising a first machine part (11) that is supported such as to be moveable relative to a second machine pat(10), wherein at said first machine part (11) a first element (15) and at said second machine part (10) a second element (14) of a measuring system (16) are arranged, said first element interacting with said second element, said measuring system detecting the relative position of said two machine elements (10, 11) relative to each other, wherein said first element (15) of the measuring system (16) is arranged at said first machine part (11) such as to be displaceable, **characterized in that** between a measuring point ($Z_m$) at said first machine part (11) and said first element (15) of said measuring system (16) there is provided a connection (26) that to a great extent is not susceptible to thermal elongation.

2. Machine tool according to claim 1, **characterized in that** said first element (15) of said measuring system (16) is arranged such as to be displaceable in the direction of a machine axis (x, y, z), preferably in the direction of the z-axis (12).

3. Machine tool according to claim 1 or claim 2, **characterized in that** said connection (26) that to a great extent is not susceptible to thermal elongation comprises a rod, preferably an Invar rod.

4. Machine tool according to any one of claims 1 to 3, **characterized in that** said connection (26) that to a great extent is not susceptible to thermal elongation comprises a thermal expansion coefficient that is below 5 ppm/K, preferably below 1 ppm/K.

5. Machine tool according to any one of claims 1 to 4, **characterized in that** by means of a spring said first element (15) is supported without play relative to said connection (26) that to a great extent is not susceptible to thermal elongation.

6. Machine tool according to any one of claims 1 to 5, **characterized in that** said first machine part (15) is displaceable in the direction of the z-axis and mounts a working spindle (38) in rotatable fashion, at a front section (39) of said working spindle there being provided a receptacle (41) for a machining tool (43) or tool holder, and that said measuring point ($Z_m$) is arranged at said front section (39).

7. Machine tool according to claim 6, **characterized in that** said second machine part (10) is an y-slide or a moving column (35).

**Revendications**

1. Machine-outil avec une première partie de machine (11) qui est logée de manière mobile par rapport à une seconde partie de machine (10), un premier élément (15) étant disposé sur la première partie de machine (11) et un second élément (14) coagissant avec le premier élément (15) d'un système de mesure (16) étant disposé sur la seconde partie de machine (10), lequel système de mesure (16) détecte la position relative des deux parties de machine (10, 11) l'une par rapport à l'autre, le premier élément (15) du système de mesure (16) étant logé de manière mobile sur la première partie de machine (11), **caractérisée en ce qu'**une liaison (26) en grande partie ne modifiable en longueur thermiquement est prévue entre un point de mesure ($Z_m$) sur la première partie de machine (11) et le premier élément (15) du système de mesure (16).

2. Machine-outil selon la revendication 1, **caractérisée en ce que** le premier élément (15) du système de mesure (16) est logé de manière mobile en direction d'un axe de machine (x, y, z), de préférence l'axe z (12).

3. Machine-outil selon la revendication 1 ou 2, **caractérisée en ce que** la liaison (26) en grande partie ne modifiable en longueur thermiquement comporte une barre, de préférence une barre en Invar.

4. Machine-outil selon l'une quelconque des revendications 1 à 3, **caractérisée en ce que** la liaison (26) en grande partie ne modifiable en longueur thermiquement présente un coefficient de dilatation thermique inférieur à 5 ppm/K, de préférence à 1 ppm/K.

5. Machine-outil selon l'une quelconque des revendications 1 à 4, **caractérisée en ce que** le premier élément (15) est logé sans jeu par un ressort (25) par rapport à la liaison (26) en grande partie modifiable en longueur thermiquement.

6. Machine-outil selon l'une quelconque des revendications 1 à 5, **caractérisée en ce que** la première partie de machine (11) est mobile en direction de l'axe z (12) et loge de manière rotative une broche de travail (38), sur la section côté avant de laquelle (39) est prévu un logement (41) pour des outils d'usinage (43) ou des supports d'outil, et **en ce que** le point de mesure (Zm) est disposé sur cette section avant (39).

7. Machine-outil selon la revendication 6, **caractérisée en ce que** la seconde machine-outil (10) est un chariot y ou support mobile (35).

Fig. 1

Fig. 2

Fig. 3

**IN DER BESCHREIBUNG AUFGEFÜHRTE DOKUMENTE**

**In der Beschreibung aufgeführte Patentdokumente**

- DE 2450322
- DE 102004044838 A1
- DE 10330915 A1
- DE 19727952 A1